# EUROPÄISCHE PATENTANMELDUNG

(11) **EP 2 947 478 A2**
(43) Veröffentlichungstag der Anmeldung: **25.11.2015**
(21) Anmeldenummer: 15167250.8
(22) Anmeldetag: 12.05.2015
(51) Int. Cl.: G01T 1/10, G01T 3/00

(54) **NEUTRONENDOSIMETER**

(30) Priorität: 21.05.2014 DE 102014107149
(71) Anmelder: GSI Helmholtzzentrum für Schwerionenforschung GmbH, 64291 Darmstadt (DE)
(72) Erfinder: Fehrenbacher, Georg, 64367 Mühltal (DE); Sokolov, Alexey, 64291 Darmstadt (DE); Radon, Torsten, 61239 Ober-Mörlen (DE)

(57) **Zusammenfassung**

Die Erfindung betrifft ein Dosimeter (1, 8) zur Erfassung polyenergetischer Neutronenstrahlung. Vorgesehen sind ein Aufnahmebereich (6) für zumindest ein Detektionselement (7) und zumindest ein Neutronenabsorptionsbereich (2, 3). Der Neutronenabsorptionsbereich (2, 3) besteht aus einem chlorhaltigen Material, bei dem Chlor einen atomaren Bestandteil eines Material-Moleküls darstellt.

## Beschreibung

Die Erfindung betrifft ein Dosimeter zur Erfassung polyenergetischer Neutronenstrahlung.

Bei technischen Anlagen, bei denen es zur Freisetzung von Neutronenstrahlung kommen kann, ist es insbesondere aufgrund gesetzlicher Vorschriften erforderlich, eine Umgebungsüberwachung durchzuführen, d.h., die freigesetzte Dosis an Neutronenstrahlung (sowie sonstiger ionisierender Strahlung) zu messen (genauer gesagt handelt es sich um die Messung der Umgebungsäquivalentdosis, insbesondere der gesetzlichen Messgröße H*(10)). Dies betrifft einerseits Bereiche, in denen sich regelmäßig Personen aufhalten bzw. aufhalten können, andererseits auch insbesondere die Dosis an den Grenzen der eingefriedeten Anlage (also die Dosis, die auf Nachbargrundstücke übertritt).

Entsprechende gesetzliche Auflagen machen eine vergleichsweise engmaschige Positionierung von entsprechenden Dosimetern erforderlich. Dementsprechend ist es unter Kostengesichtspunkten wünschenswert, dass diese vergleichsweise einfach und kostengünstig aufgebaut sind. Dies betrifft nicht nur die eigentliche Anschaffung der Dosimeter, sondern auch den dauerhaften Betrieb derselben. So ist es beispielsweise wünschenswert, dass die betreffenden Detektoren vergleichsweise einfach "gewartet werden können", was insbesondere den regelmäßigen Austausch der eigentlichen, die Dosis registrierenden Dosismesseinrichtungen betrifft. Rein beispielhaft ist in diesem Zusammenhang die Verwendung von Filmen bzw. Thermolumineszenzkarten (TLD-Karten) zu nennen. Diese registrieren die auf sie einfallende Strahlung aufsummierend. Das Auslesen der Dosimeter erfolgt durch Austausch der betreffenden Filme bzw. Karten und der Auswertung der von diesen aufgenommenen Dosis an einem zentralen Ort. Ein weiterer Aspekt der "regelmäßigen Wartung" von Dosimetern betrifft ein Verbringen derselben von einem Ort zum anderen. Hier ist es wünschenswert, dass die betreffenden Dosimeter akzeptabel klein und akzeptabel leicht sind.

Weiterhin ist bei Dosimetern zu berücksichtigen, dass es zur Erfüllung der gesetzlichen Vorgaben ausreichend ist, wenn diese überempfindlich auf die betreffende Strahlung sind. Denn wenn bei einem überempfindlichen Dosimeter die von diesem registrierte Strahlungsdosis den vorgegebenen Grenzwert nicht überschreitet, so wird auch durch die tatsächlich freigesetzte Strahlungsdosis der vorgegebene Grenzwert nicht überschritten. Man spricht oftmals von einer konservativen Abschätzung der Umgebungsäquivalentdosis. Andererseits möchte man jedoch beispielsweise unnötige, zum Teil sehr teure Abschirmungsmaßnahmen vermeiden, weshalb die verwendeten Dosimeter auch nicht übermäßig überempfindlich sein sollten.

Als gesetzlich relevante Messgröße ist insbesondere an die gesetzliche Messgröße H*(10) zu denken, die ein Maß für die Umgebungsäquivalentdosis darstellt.

Die Relevanz des erwähnten Kostenaspekts wird darüber hinaus deutlich, wenn man sich vergegenwärtigt, dass Neutronenstrahlung bei einer zunehmenden Anzahl von technischen Geräten freigesetzt werden kann. So wird Neutronenstrahlung beispielsweise nicht nur bei Kernreaktoren freigesetzt, sondern auch bei Teilchenbeschleunigern, wie insbesondere bei Ionenbeschleunigern. Bei Teilchenbeschleunigern kommt es zwar zu keiner "direkten Freisetzung" von Neutronen. Wenn jedoch Teilchen und/oder hochenergetische Bremsstrahlung (gegebenenfalls auch Synchrotronstrahlung) mit Materie interagieren, kann es auch zur Freisetzung von Neutronen unterschiedlichster Energien kommen. In diesem Zusammenhang ist zu erwähnen, dass die Verwendung von Teilchenbeschleunigern stark zugenommen hat und weiterhin zunimmt. So werden beispielsweise Elektronenstrahlen zwischenzeitlich industriell für Schweißungen (insbesondere zum Schweißen von Aluminium) verwendet. Auch Ionenbeschleuniger (einschließlich Schwerionenbeschleuniger) werden zwischenzeitlich beispielsweise im medizinischen Bereich zur Tumorbehandlung genutzt. Dementsprechend hat die Anzahl betreffender technischer Anlagen, bei denen es zur Freisetzung von Neutronenstrahlung kommen kann, über die Jahre hinweg zugenommen, mit weiterhin ansteigender Tendenz.

Ein Problem tritt weiterhin auf, wenn es gilt, hochenergetische Neutronenstrahlung bzw. polyenergetische Neutronenstrahlung zu messen. Die bei den erwähnten TLD-Karten genutzten Kristalle können beispielsweise nur vergleichsweise langsame Neutronen, sogenannte thermische Neutronen, registrieren. Diese weisen eine kinetische Energie von typischerweise ≤ 100 meV auf. Soll höherenergetische Neutronenstrahlung gemessen werden, so müssen entweder vollständig andere Messprinzipien verwendet werden, oder die Neutronen müssen zunächst derart verlangsamt werden, dass diese von TLD-Karten registriert werden können. Bei heutigen technischen Anlagen, insbesondere bei Schwerionenbeschleunigern, ist es insbesondere erforderlich, Neutronenstrahlung mit Energien bis hin zu einigen 100 GeV messen zu können.

In diesem Zusammenhang ist nicht nur an eine möglichst gleichmäßige Messkurve bezüglich der Neutronenstrahlung zu denken, sondern insbesondere auch an eine unterschiedliche Gewichtung unterschiedlicher Neutronenenergien, da unterschiedliche Energiebereiche eine unterschiedlich hohe Dosis im menschlichen Körper verursachen, und dementsprechend unterschiedlich stark "zu berücksichtigen sind", was sich auch insbesondere bei der Definition der bereits erwähnten, gesetzlichen Messgröße H*(10) manifestie rt.

Zur Lösung des Problems wurde beispielsweise in DE 10 2004 020 979 A1 vorgeschlagen, zur Messung von Neutronenstrahlung im Energiebereich von 0,025 eV bis hin zu einigen 100 GeV eine kugelförmige Dosimeteranordnung mit einem zentral angeordneten Detektionselement, wie beispielsweise einem Thermolumineszenzkristall, zu verwenden. Das Thermolumineszenzkristall ist dabei von einem Neutronenkonverter umgeben, der hochenergetische Neutronen (also Neutronen im Energiebereich von > 10 MeV) durch Interaktion von Neutronen mit Metallatomen (also Material des Neutronenkonverters; genauer: mit Metallatomkernen) zu Spallationsreaktionen führt, also zur Abdampfung von Protonen und Neutronen. Die dabei emittierten Neutronen (schnelle Neutronen) weisen eine Energie auf, die deutlich geringer ist, als die auf das Dosimeter auftreffenden hochenergetischen Neutronen. Dementsprechend kann mittels der durch Spallation freigesetzten Neutronenstrahlung auf die "ursprüngliche Dosis hochenergetischer Neutronen" geschlossen werden. Der Neutronenkonverter wiederum ist von einem als Moderatorkörper dienenden Grundkörper umgeben, der eine wasserstoffhaltige Substanz aufweist, wie beispielsweise wasserstoffhaltige Kunststoffe, insbesondere Polyäthylen (PE) oder Polymethylmethachrylat (PMMA). Dieser Moderatorkörper dient der Abbremsung von einfallenden schnellen Neutronen (Neutronen mit "mittlerer Energie" von typischerweise 25 meV bis 10 MeV), sodass diese schlussendlich vom Thermolumineszenzkristall registriert werden können. Ein großer Nachteil des hier beschriebenen Dosimeters ist seine große Masse und sein aufwändiger Aufbau sowie seine vergleichsweise große Größe. All dies macht das Dosimeter in der Praxis vergleichsweise schwer handhabbar (auch wenn die eigentliche Funktionalität des Dosimeters, also die Registrierung ionisierender Strahlung, durchaus erfüllt wird).

Die Aufgabe der Erfindung besteht somit darin, ein Dosimeter zur Erfassung von polyenergetischer Neutronenstrahlung zur Verfügung zu stellen, welches gegenüber Dosimetern zur Erfassung polyenergetischer Neutronenstrahlung, wie sie im Stand der Technik bekannt sind, verbessert ist.

Die Erfindung löst diese Aufgabe.

Es wird vorgeschlagen, ein Dosimeter zur Erfassung polyenergetischer Neutronenstrahlung, welches zumindest einen Aufnahmebereich für zumindest ein Detektionselement sowie zumindest einen Neutronenabsorptionsbereich aufweist derart auszubilden, dass der Neutronenabsorptionsbereich zumindest bereichsweise ein chlorhaltiges Material aufweist oder aus einem chlorhaltigen Material besteht, welches Chlor enthält, insbesondere ein chlorhaltiges Material, bei dem Chlor einen atomaren Bestandteil eines Material-Moleküls darstellt. Bei dem Aufnahmebereich für zumindest ein Detektionselement kann es sich beispielsweise um einen Kartenschlitz für handelsübliche TLD-Karten (TLD=Thermolumineszenzdetektor) handeln. Selbstverständlich sind auch andere "passiv" registrierende Einrichtungen, insbesondere dosisintegrierende Einrichtungen, wie Filme, Fotolumineszenzkristalle, Kernspurdetektoren, organische Hochpolymere, anorganisches Glas, Halbleiter oder dergleichen denkbar. Bei einem Thermolumineszenzkristall ist insbesondere an LiF zu denken. Die Verwendung von TLD-Karten ist insbesondere deshalb vorteilhaft, weil die Infrastruktur hierzu nicht geändert werden muss. Das heißt, dass bereits vorhandene TLD-Kartenauslesegeräte weiterhin verwendet werden können. Dies kann die Akzeptanz des vorliegend vorgeschlagenen Dosimeters deutlich erhöhen. Selbstverständlich ist aber auch zusätzlich oder alternativ daran zu denken, aktive Detektionselemente zu verwenden. Dies ist insbesondere dann sinnvoll, wenn schnell auf eine Dosisüberschreitung reagiert werden muss (beispielsweise durch Abschalten der Anlage oder dergleichen). Möglich ist es selbstverständlich, dass das Dosimeter zusätzliche Einrichtungen aufweist, wie insbesondere einen oder mehrere zusätzliche Moderatoren, einen oder mehrere zusätzliche Neutronenkonverter oder einen oder mehrere zusätzliche Neutronenabsorber. Es ist einsichtig, dass in Falle zusätzlicher und/oder andersartig ausgebildeter Detektoren und/oder beim Vorsehen zusätzlicher Vorrichtungen der Aufnahmebereich für die betreffenden Vorrichtungen geeignet ausgebildet sein muss. Bevorzugt ist es im Übrigen, wenn der Aufnahmebereich des vorliegend vorgeschlagenen Dosimeters von außen derart zugänglich ist, dass die Detektionselemente (insbesondere TLD-Karten oder dergleichen) von außen leicht zugänglich sind, sodass diese gegebenenfalls leicht getauscht werden können.

Unter Materialbereichen (vorliegend beispielsweise einem Neutronenabsorptionsbereich) können im Wesentlichen beliebige Geometrien verstanden werden. Insbesondere können die betreffenden Geometrien gewisse Symmetrien aufweisen. Grundsätzlich können diese beispielsweise sphärisch bzw. kugelförmig ausgebildet sein. Auch ist es möglich, dass gewisse "abgewandelte Kugelformen", wie beispielsweise rotationsellipsoide Formen oder dergleichen Anwendung finden. Auch die Nutzung gewissermaßen "teilsymmetrischer" geometrischer Formen ist dabei denkbar. Rein beispielhaft kann in diesem Zusammenhang an Zylinder oder tonnenförmige Formen gedacht werden (einschließlich einer "Aufeinander-Anordnung von Zylinderscheiben" und dergleichen). Bei Verwendung von zumindest bis zu einem gewissen Grad symmetrischer Formen lässt sich oftmals die gesetzliche Forderung, dass die Umgebungsüberwachung unabhängig von der Richtung der Strahlung erfolgt (so wie dies beispielsweise bei der Messgröße H*(10) der Fall ist) besonders einfach realisieren. Möglich ist es aber auch, sonstige geometrische Formen zu nutzen, wie beispielsweise Polyeder oder dergleichen. Die Bereiche können dabei beispielsweise derart ausgebildet und angeordnet sein, dass diese nur in gewissen (Raum-) Winkelbereichen, insbesondere relativ zum Detektionselement, angeordnet sind, aber auch derart, dass diese das betreffende Detektionselement mehr oder weniger gut umhüllen.

Auch wenn es auf den ersten Blick widersinnig erscheint, für ein Dosimeter (welches ja Strahlung registrieren soll; vorliegend insbesondere Neutronenstrahlung) ein strahlenabsorbierendes Material zu verwenden (vorliegend einen Neutronenabsorber), so kann sich dessen Verwendung als vorteilhaft erweisen. Dies gilt insbesondere dann, wenn das betreffende Material bzw. der betreffende Neutronenabsorberbereich energieselektiv ist. Unter einem "energieselektiv wirkenden Absorber" kann insbesondere ein Absorbermaterial verstanden werden, welches im Wesentlichen ausschließlich Neutronen in einem gewissen Energiebereich (gegebenenfalls auch in mehreren Energiebereichen) absorbiert oder umgedreht lediglich Neutronen in einem gewissen Energiebereich (oder mehreren Energiebereichen) durchlässt, wohingegen die sonstigen Energiebereiche im Wesentlichen absorbiert werden. Der Vorteil hierbei ist, dass bei (komplexeren) Dosimetern bzw. bei Detektionselementen üblicherweise eine gewisse Art der Filterkurve (bzw. Registrierungskurve) auftritt. Das heißt, dass gewisse Energiebereiche im Vergleich zu anderen Energiebereichen stärker bzw. schwächer registriert werden. Durch die Verwendung von Neutronenabsorbern ist es dann möglich, Energiebereiche, in denen überproportional stark registriert wird, zu "korrigieren", sodass sich schlussendlich eine ausgewogenere, gleichmäßigere Gesamt-Filterkurve ergeben kann. In der Praxis hat sich gezeigt, dass es oftmals erforderlich ist, dass thermische Neutronen absorbiert werden müssen, um eine ausgewogenere Dosisregistrierung zu erzielen (wobei - nicht nur in diesem Zusammenhang - nicht nur an "gleichmäßige Messkurven" sondern auch zusätzlich oder alternativ an eine unterschiedliche Gewichtung von Neutronenstrahlung unterschiedlicher Energiebereiche hinsichtlich ihrer unterschiedlichen "Effektivität" auf beispielsweise menschliches Gewebe zu denken ist). Hierzu wurden in der Vergangenheit bereits unterschiedliche Materialien vorgeschlagen. Die Erfinder haben nunmehr festgestellt, dass Chlor hierbei erstaunlich positive Eigenschaften aufweist. Genauer gesprochen ist hier insbesondere ³⁵Cl besonders effektiv, um thermische Neutronen zu absorbieren. Dementsprechend kann also ein betreffendes Material mit einem höheren ³⁵Cl-Anteil genutzt werden (angereichertes Material). In der Praxis ist es jedoch einfacher, wenn man Chlor mit einem natürlichen Isotopenverhältnis verwendet und zum Ausgleich "ein wenig mehr chlorhaltiges Material" verwendet. Obgleich es grundsätzlich möglich ist, beispielsweise (gasförmiges) Chlor zu verwenden (wobei es durchaus auch möglich ist, dass beispielsweise kleine "Chlorbläschen" in einem schaumartigen Material verwendet werden), so ist dies oftmals nicht praktikabel, insbesondere aufgrund der Aggressivität und Giftigkeit von Chlor. Dementsprechend wird vorgeschlagen, anstelle von (reinem) Chlor ein Material zu verwenden, bei dem Moleküle enthalten sind, bei denen Chloratome im Molekül vorkommen. In einer derartigen "chemisch gebundenen" Form ist Chlor dann in aller Regel deutlich unproblematischer zu nutzen.

Insbesondere ist es möglich, dass das chlorhaltige Material zumindest bereichsweise ein chlorhaltiges Kunststoffmaterial aufweist oder zumindest bereichsweise aus einem chlorhaltigen Kunststoffmaterial besteht. Hierdurch kann ein besonders einfacher Aufbau des vorliegend vorgeschlagenen Dosimeters realisiert werden. Insbesondere ist es möglich, mit Kunststoffmaterialien auf einfache Weise im Wesentlichen beliebige Formen auszubilden (beispielsweise durch Kunststoffspritzgussvorgänge). Darüber hinaus sind Kunststoffmaterialien weit verbreitet und kostengünstig erhältlich. Dank einer im Wesentlichen beliebigen Formbarkeit (wobei insbesondere thermoplastische Kunststoffe zu nennen sind) ist insbesondere der mechanische Aufbau des resultierenden Dosimeters üblicherweise besonders einfach, da das Material selbst als "statisches Element" fungieren kann.

Besonders bevorzugt ist es, wenn bei dem Dosimeter das chlorhaltige Kunststoffmaterial zumindest bereichsweise PVC aufweist (PVC = Polyvinylchlorid) oder aus PVC besteht, vorzugsweise PVC hoher Dichte (HDPVC=High Density PVC) aufweist oder aus PVC hoher Dichte besteht. Gerade PVC ist kostengünstig und weit verbreitet. Damit kann ein besonders einfacher Aufbau des Dosimeters nochmals gefördert werden. Ein weiterer positiver Aspekt von PVC (gegebenenfalls auch von anderen Material-Molekülen bzw. Kunststoffmaterialien) ist, dass diese oftmals auch eine vergleichsweise große Menge an Wasserstoff in chemisch gebundener Form aufweisen. Der Anteil an Wasserstoff weist dabei üblicherweise weitere für Dosimeteranwendungen üblicherweise vorteilhafte Eigenschaften auf (worauf im Folgenden noch eingegangen wird).

Weiterhin ist es möglich, das Dosimeter mit zumindest einem Moderatorbereich zu versehen, welcher vorzugsweise zumindest bereichsweise ein wasserstoffhaltiges Material aufweist oder aus einem wasserstoffhaltigen Material besteht, wobei der Wasserstoff insbesondere einen atomaren Bestandteil eines Material-Moleküls darstellt. Für den "Einschluss" von Wasserstoff und den vorteilhaften "chemisch gebundenen Einschluss" von Wasserstoff gilt das bereits vorab im Zusammenhang mit Chlor Gesagte in Analogie. Die Verwendung eines Moderators ist insbesondere sinnvoll, um Neutronenstrahlung mit (insbesondere mittlerer) Energie (also so genannte schnelle Neutronen) derart "energetisch zu verschieben" (mit anderen Worten die einfallende Neutronenstrahlung derart "energetisch zu behandeln"), dass diese durch das verwendete Detektionselement bzw. durch die verwendeten Detektionselemente registriert werden kann. Beispielsweise kann es sich hierbei um die Verlangsamung von (schnellen) Neutronen im Bereich von 25 meV oder 100 meV bis hin zu etwa 10 MeV handeln, die durch Interaktion mit dem Moderatormaterial derart abgebremst werden, dass diese das Moderatormaterial (zumindest teilweise) als thermische Neutronen verlassen, die wiederum beispielsweise von TLD-Karten registriert werden können. Die "energetische Wirkung" kann dabei durch entsprechende Materialwahl und/oder entsprechende Dicke des Materials beeinflusst werden. Eine zusätzliche Beeinflussung kann sich darüber hinaus durch die Art der Anordnung unterschiedlicher Materialschichten ergeben. Beispielsweise ist hier daran zu denken, ob eine Moderatorschicht vor und/oder nach einem Neutronenabsorptionsbereich und/oder einem Neutronenkonversionsbereich vorgesehen wird.

Möglich ist es weiterhin, dass das Dosimeter derart ausgebildet wird, dass zumindest ein Neutronenabsorptionsbereich und zumindest ein Moderatorbereich zumindest bereichsweise zusammenfallen und/oder zumindest bereichsweise ein gleichartiges, vorzugsweise ein gleiches Material aufweisen oder zumindest bereichsweise aus einem gleichartigen, vorzugsweise aus einem gleichen Material bestehen. Dies kann einerseits den mechanischen Aufwand für das Dosimeter vermindern helfen, da weniger unterschiedliche Bereiche vorgesehen werden müssen. Darüber hinaus kann sich eine derartige Ausbildung auch in Bezug auf die Dosis-Registrierungskurve als besonders vorteilhaft erweisen, da gewissermaßen über einen "längeren Bereich hinweg" eine Neutronenabsorption und gleichzeitig eine Neutronenmoderation erfolgen kann, wobei sich beide Effekte im Ergebnis vorteilhaft beeinflussen können. Schließlich kann durch die vorgeschlagene Ausbildung oftmals auch eine zusätzliche, so nicht zu erwartende Reduktion des Gewichts und/oder der geometrischen Ausmaße des Dosimeters erzielt werden. Als Materialien, welche besonders geeignet sind, eine besonders effektive "gleichzeitige" Neutronenabsorptionswirkung und Neutronenmoderationswirkung zu realisieren, sind die bereits vorab erwähnten chlorhaltigen Kunststoffmaterialien, wie insbesondere PVC-Materialien zu nennen. Bei einer Moderationswirkung ist insbesondere an eine Moderationswirkung in Bezug auf Neutronen zu denken.

Weiterhin wird vorgeschlagen, dass das Dosimeter eine Mehrzahl von Moderatorbereichen aufweist, wobei vorzugsweise zumindest zwei Moderatorbereiche verschiedenartig ausgebildet sind und/oder ein verschiedenartiges Material aufweisen und/oder aus einem verschiedenartigen Material bestehen. Durch eine geeignete Anordnung und Auswahl der betreffenden Materialien kann die schlussendlich registrierte Dosis besonders geeignet hinsichtlich ihrer Registrierungskurve ("Filterkurve") gewählt werden. Insbesondere wenn unterschiedliche Materialien zum Einsatz kommen, kann die Registrierungskurve besonders einfach und effektiv an eine gewünschte Zielvorgabekurve angepasst werden. Die Anordnung der Moderatorbereiche bezieht sich dabei nicht notwendigerweise auf die Moderatorbereiche "an sich", sondern auch im Verhältnis zu gegebenenfalls vorgesehenen weiteren Bereichen, wie insbesondere zusätzlichen Neutronenabsorptionsbereichen und/oder Neutronenkonversionsbereichen.

Insbesondere ist in diesem Zusammenhang daran zu denken, dass bei dem Dosimeter zumindest ein Moderatorbereich ein Polyäthylenmaterial (PE) und/oder ein Polypropylenmaterial (PP) und/oder ein Polymethylmethachrylatmaterial (PMMA) aufweist und/oder aus einem Polyäthylenmaterial und/oder einem Polypropylenmaterial und/oder einem Polymethylmethachrylatmaterial besteht, wobei das betreffende Material vorzugsweise ein dichtes Polyäthylenmaterial (HDPE) und/oder ein dichtes Polypropylenmaterial (HDPE) und/oder ein dichtes Polymethylmethachrylatmaterial (HDPMMA) ist. Derartige Materialien sind kostengünstig und problemlos verfügbar und weisen darüber hinaus vorteilhafte mechanische Eigenschaften auf. Darüber hinaus sind diese aufgrund ihres hohen Wasserstoffgehalts (in chemisch gebundener Form) und im Wesentlichen fehlender atomarer Anteile an neutronenabsorbierendem und/oder neutronenkonvertierendem Material besonders geeignet als im Wesentlichen "reiner" Neutronenmoderator zu wirken.

Weiterhin wird vorgeschlagen, dass bei dem Dosimeter zumindest ein Neutronenkonverterbereich vorgesehen wird, wobei der Neutronenkonverterbereich zumindest bereichsweise zumindest ein metallisches Material aufweist bzw. aus einem metallischen Material besteht. Derartige Neutronenkonverterbereiche sind insbesondere geeignet, um besonders hochenergetische Neutronenstrahlung in einen "gut detektierbaren Energiebereich" umzusetzen. Insbesondere ist in diesem Zusammenhang an hochenergetische Neutronen mit Energien von > 10 MeV bis hin zu mehreren 100 GeV zu denken. Metallische Materialien mit möglichst hoher Kernladungszahl (typischerweise Ladungszahlen Z > 15 oder Z > 20) sind besonders geeignet für sogenannte Spallations-Reaktionen, bei denen hochenergetische Neutronen von den Atomen (Atomkernen) eingefangen werden (wobei es sich um ein "temporäres Einfangen" handelt), wobei die eingefangenen Neutronen durch Interaktion mit Nukleonen zu einer Abdampfung von Protonen und Neutronen führen. Die abdampfenden Protonen und Neutronen haben dabei eine typischerweise signifikant niedrigere Energie als die eingefangen Neutronen; dies ist typisch für Spallations-Reaktionen. Hierbei ist es insbesondere denkbar, dass die "Effektivität" des Neutronenkonverters durch vorgeschaltete und/oder nachgeschaltete Moderatorbereiche und/oder Neutronenabsorptionsbereiche vorteilhaft beeinflusst wird.

Insbesondere ist bei dem metallischen Material für die Neutronenkonverterbereiche an ein Titanmaterial, an ein Chrommaterial, an ein Vanadiummaterial, an ein Eisenmaterial, an ein Kupfermaterial, an ein Wolframmaterial, an ein Bleimaterial, an ein Wismutmaterial und/oder an ein Zirkoniummaterial zu denken. Derartige metallische Materialien haben sich als besonders geeignet für den vorgeschlagenen Zweck erwiesen.

Vorgeschlagen wird insbesondere, dass bei dem Dosimeter zumindest ein Materialbereich schichtenartig ausgebildet ist und/oder dass bei dem Dosimeter zumindest ein Materialbereich eine im Wesentlichen zylindrische Formgebung und/oder eine im Wesentlichen tonnenartige Formgebung aufweist. Mit den vorgeschlagenen geometrischen Formen lässt sich in der Regel eine kompakte und leichte Ausbildung des Dosimeters realisieren, wobei dennoch eine typischerweise hohe Symmetrie bezüglich der zu detektierenden Neutronenstrahlung realisiert werden kann. Mit einer schichtenartigen Ausbildung der Materialbereiche (insbesondere bei Verwendung von "zwiebelartig übereinanderliegenden Schichtabfolgen") kann eine besonders vorteilhafte Anpassung der unterschiedlichen Materialien und/oder Bereiche aufeinander realisiert werden. Dies kann im Ergebnis zu besonders vorteilhaften Dosis-Registrierungs-Filterkurven führen, was in aller Regel erwünscht ist.

Weiterhin wird bei dem Dosimeter vorgeschlagen, dass zumindest ein Materialbereich, insbesondere zumindest ein Moderatorbereich, zumindest ein Neutronenabsorberbereich und/oder zumindest ein Neutronenkonverterbereich mit Ausnehmungen versehen ist. Mit den Ausnehmungen (die beispielsweise als Löcher oder sonstige Hohlräume ausgebildet sein können) kann sich auch bei vorgegebenen Materialien und/oder vorgegebenen Schichtdicken eine Anpassbarkeit der Beeinflussung von Neutronen unterschiedlicher Energien realisieren. Wenn rein beispielhaft in einem Neutronenabsorptionsbereich, der thermische Neutronen einfängt, Löcher vorgesehen werden, so kann der Anteil thermischer Neutronen, der den Neutronenabsorberbereich durchdringen kann, erhöht werden. Diese Ausbildungsform kann sich insbesondere dann als sinnvoll erweisen, wenn ein vorgegebenes Standard-Dosimeter an bestimmte Randbedingungen angepasst werden soll (eine Art Kalibrierung desselben) und/oder beispielsweise mechanische Zwangsbedingungen eine (grundsätzlich denkbare) Verdünnung eines betreffenden Bereichs (im vorliegenden Beispiel eines Neutronenabsorberbereichs) verhindern bzw. (unverhältnismäßig stark) erschweren.

Eine bevorzugte Weiterbildung des vorgeschlagenen Dosimeters ergibt sich, wenn zumindest ein aktives Detektionselement und/oder zumindest ein passives Detektionselement vorgesehen ist. Auf diese Weise ist es je nach Erfordernis möglich, sowohl ein "kumuliertes" Messergebnis zu erhalten (insbesondere zur dosimetrischen Umgebungsüberwachung; in diesem Zusammenhang werden in aller Regel passive Detektionselemente vorgesehen) und/oder ein "sofortiges" Messergebnis zu erhalten (in diesem Fall kann besonders schnell auf allfällige Ereignisse reagiert werden; in diesem Zusammenhang werden in aller Regel aktive Detektionselemente vorgesehen). Grundsätzlich können hierbei alle denkbaren, insbesondere die im Stand der Technik bekannten Detektionselemente verwendet werden. Im Zusammenhang mit passiven Detektionselementen ist beispielsweise an fotografische Filme, an Spaltdetektoren und/oder an "dosimetrisch integrierende" Kristalle zu denken. Bei Spaltdetektoren löst die nachzuweisende Strahlung (insbesondere Neutronen) im Detektormaterial (beispielsweise in 235-U) eine Kernspaltung aus, wobei die erzeugten Spaltfragmente Spuren in einem entsprechenden Material (beispielsweise in CR-39) erzeugen. Bei aktiven Detektionselementen ist beispielsweise an Zählrohre, wie beispielsweise an Zählrohre mit 3-He oder BF₃ zu denken. Aber auch Halbleiterdetektoren, insbesondere Halbleiterdetektoren, die mit einem Konverter (beispielsweise aufweisend B und/oder Li; insbesondere ein Konverter für langsame Neutronen) überdeckt sind, sind denkbar. Eine weitere denkbare Variante ist die Verwendung von Aktivierungsdetektoren für gepulste Neutronenstrahlung. Bei diesen wird in der Regel im Zentrum des Dosimeters eine dünne Folie (beispielsweise eine Gold- oder Silberfolie) aktiviert, deren radioaktive Zerfälle über einen Halbleiterdetektor gemessen werden; ein zweiter Halbleiterdetektor ohne Folie dient als Referenz (das Differenzsignal ist ein Maß für die Neutronendosis).

Vorgeschlagen wird weiterhin, dass bei dem Dosimeter zumindest ein Thermolumineszenzelement und/oder zumindest ein Photolumineszenzelement vorgesehen ist, welches bevorzugt separat handhabbar vom übrigen Dosimeter ausgebildet ist und sich weiter bevorzugt im Aufnahmebereich für zumindest ein Detektionselement befindet (wobei dieses besonders bevorzugt entnehmbar ausgeführt ist). Insbesondere ist es denkbar, dass zumindest ein passives Detektionselement auf die vorgeschlagene Weise ausgebildet ist. Derartige Detektionselemente haben sich in der Vergangenheit als besonders vorteilhaft erwiesen und sich dementsprechend durchgesetzt. Dementsprechend ist eine entsprechende Infrastruktur vorhanden (beispielsweise Thermolumineszenz-Auswertegeräte), die bei der vorgeschlagenen Ausbildung des Dosimeters weiter genutzt werden können. Ein weiterer Vorteil speziell von Thermolumineszenzelementen bzw. Photolumineszenzelementen ist darüber hinaus auch, dass diese auch kurzzeitige "Schauer" an Neutronenstrahlung zu detektieren vermögen. Ein derartiges gepulstes Auftreten von (Neutronen-) Strahlung ist in Zukunft in zunehmendem Maß zu erwarten, da sich zwischenzeitlich Beschleunigeranlagen unter Verwendung von ultrakurz gepulsten Lasern verbreiten.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel eines Neutronendosimeters in einer schematischen, teilweise aufgebrochenen, perspektivischen Ansicht;
- Fig. 2:: das erste Ausführungsbeispiel eines Neutronendosimeters in einer schematischen Längsschnittansicht;
- Fig. 3:: das erste Ausführungsbeispiel eines Neutronendosimeters in einer schematischen Querschnittsansicht;
- Fig. 4:: ein zweites Ausführungsbeispiel eines Neutronendosimeters in einer schematischen Längsschnittansicht.

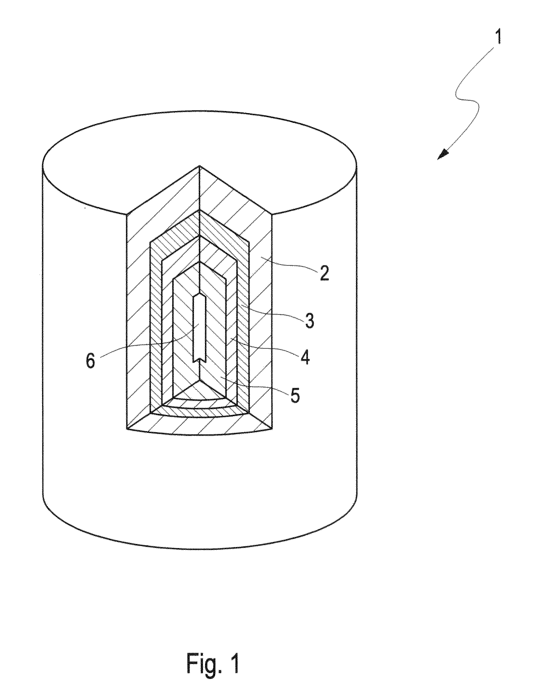

In Fig. 1 ist ein erstes Ausführungsbeispiel eines Neutronendosimeters 1 in einer schematischen Perspektivansicht dargestellt. Um den inneren Aufbau des Neutronendosimeters zu verdeutlichen, ist das Neutronendosimeter 1 teilweise aufgeschnitten dargestellt. Wie man Fig. 1 gut entnehmen kann, besteht das Neutronendosimeter 1 aus einer Mehrzahl unterschiedlicher Schichten 2, 3, 4, 5, die matrioschka-artig (nach Art der bekannten russischen, aus Holz gefertigten und bunt bemalten, ineinander schachtelbaren, eiförmigen Puppen mit Talisman-Charakter) ineinander geschachtelt angeordnet und ausgebildet sind.

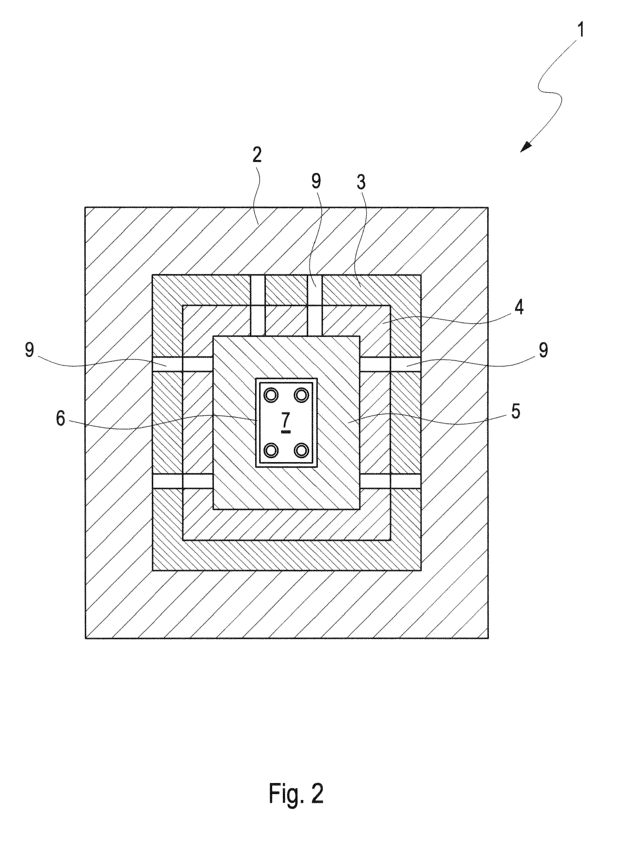

Im Inneren des Neutronendosimeters 1 ist darüber hinaus ein Aufnahmebereich 6 für ein Detektionselement 7 (vorliegend eine Kartenaufnahme 6 für eine TLD-Karte 7) vorgesehen, in die eine TLD-Karte 7 (TLD für Thermolumineszenzdetektor) eingesetzt werden kann (in Fig. 2 ist eine derartige TLD-Karte 7 exemplarisch im Aufnahmebereich 6 befindlich eingezeichnet.) Der Aufnahmebereich 6 ist derart gestaltet, dass dieser von außen zugänglich ist. Dies kann beispielsweise durch einen vorzugsweise mithilfe einer Art Stopfen verschließbaren, länglichen Zugangskanal geschehen, der vorliegend aus Übersichtlichkeitsgründen nicht eingezeichnet ist.

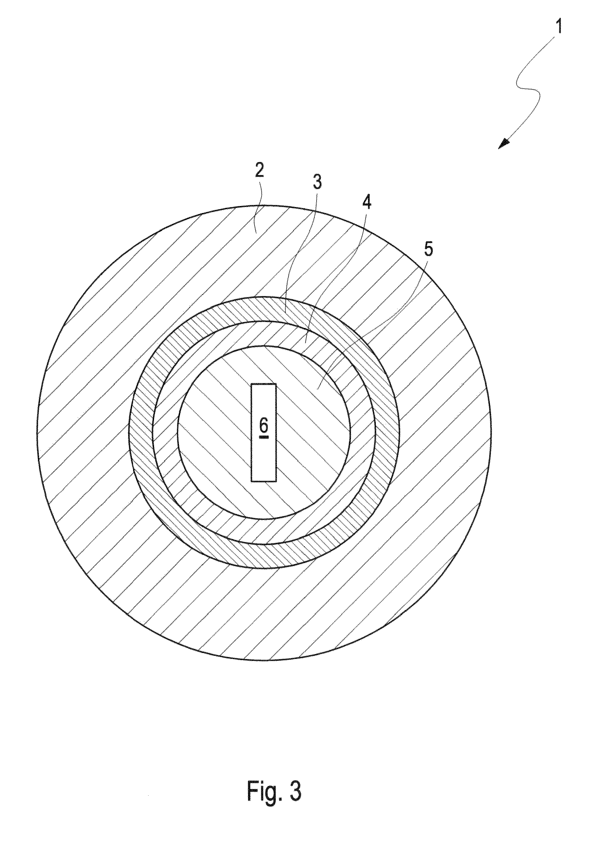

Wie man Fig. 1 entnehmen kann (insbesondere auch in Zusammenschau mit Figs. 2 und 3, die das Neutronendosimeter 1 in unterschiedlichen Ansichten darstellen), sind die unterschiedlichen Schichten 2, 3, 4, 5, jeweils zylindrisch ausgebildet, wobei sowohl der Durchmesser als auch die Höhe des jeweiligen Zylinders (genauer: Hohl-Zylinders, da ja im Inneren jeweils noch andere Schichten und/oder der Aufnahmebereich 6 angeordnet sind) von außen nach innen abnehmen.

Die im dargestellten ersten Ausführungsbeispiel äußerste Schicht 2 besteht aus einer PVC-Schicht 2 (PVC = Polyvinylchlorid). Die PVC-Schicht 2 enthält in chemisch gebundener Form in ihren Molekülen eine größere Anzahl an Wasserstoffatomen sowie eine größere Anzahl an Chloratomen. Wasserstoff ist dabei für Neutronenstrahlung ein geeigneter Moderator. Das heißt, dass einfallende höherenergetische Neutronen (insbesondere höhere Energien als thermische Neutronen; mit anderen Worten Energien von ≥ 25 meV) in der PVC-Schicht 2 verlangsamt werden (moderiert werden). Eine derartige Moderation schnellerer Neutronen (bzw. eine sonstige Verlangsamung aufgrund unterschiedlicher Effekte für speziell höhere Energien, was im Folgenden insbesondere in Zusammenhang mit den anderen Schichten noch näher beschrieben werden wird) ist erforderlich, da vorliegend insbesondere vorgeschlagen wird, als Detektionselement handelsübliche, sogenannte TLD-Karten 7 zu verwenden. Die Thermolumineszenzkristalle (meist LiF-Kristalle) derartiger TLD-Karten können nämlich im Wesentlichen ausschließlich thermische Neutronen registrieren. Ein ähnliches Detektionsverhalten liegt auch für anderweitige Detektionselemente (beispielsweise Kernspurdetektoren, Spaltdetektoren oder dergleichen) vor, wenn auch die Neutronen gegebenenfalls stärker oder nicht ganz so stark verlangsamt werden müssen.

Weiterhin bewirkt die PVC-Schicht 2 aufgrund ihres Chloranteils (genauer gesagt handelt es sich im Wesentlichen ausschließlich um das Isotop ³⁵Cl) einen Einfang (Absorption) insbesondere langsamer, speziell thermischer Neutronen.

Dementsprechend wirkt die PVC-Schicht 2 als kombinierte Neutronenabsorptions- und Neutronenmoderatorschicht.

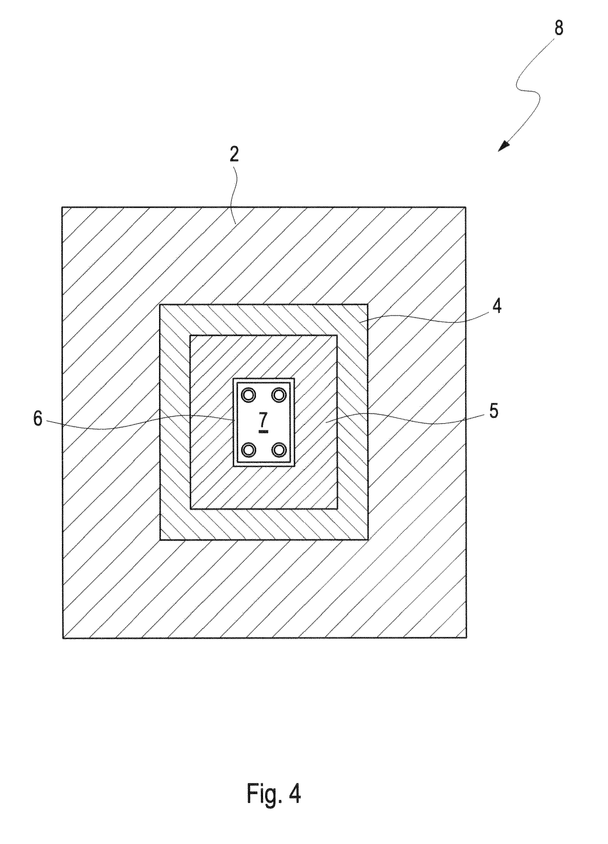

Eine Absorption von Neutronen in einem gewissen Energiebereich ist vorteilhaft, um das "effektive" Ansprechverhalten des Detektionselements 7 über den gesamten zu detektierenden Neutronen-Energiebereich (es handelt sich um polyenergetische Neutronenstrahlung) möglichst homogen und/oder in Abhängigkeit der unterschiedlichen "biologischen Effektivität", insbesondere auf menschliches Gewebe, zu gestalten. Durch eine entsprechende Anpassung der unterschiedlichen Schichten aufeinander ist dies möglich (was grundsätzlich im Stand der Technik bekannt ist). Vorliegend wird jedoch die Verwendung von PVC zur Ausbildung einer kombinierten Neutronenabsorptions- und Neutronenmoderatorschicht 2 vorgeschlagen, was besonders vorteilhaft ist, weil hierdurch eine nicht unerhebliche Größen- und Gewichtsersparnis realisiert werden kann. PVC ist darüber hinaus gut zu bearbeiten und problemlos und kostengünstig erhältlich. Insbesondere kann dank der PVC-Schicht 2 eine allfällige, spezielle Neutronenabsorptionsschicht mit geringerer Dicke bzw. geringerem Neutronenabsorptionsvermögen ausgebildet werden (erstes Ausführungsbeispiel eines Neutronendosimeters 1 gemäß Figs. 1 bis 3) oder sogar gänzlich entfallen (zweites Ausführungsbeispiel eines Neutronendosimeters 8 gemäß Fig. 4). Hierdurch kann insbesondere ein deutlich kostengünstigerer Aufbau erzielt werden, da Neutronenabsorptionsschichten oftmals unter Verwendung vergleichsweise teurer und schwer handhabbarer Materialien (beispielsweise Bor) ausgebildet werden.

Wie bereits erwähnt, ist gemäß dem ersten Ausführungsbeispiel eines Neutronendosimeters 1 nach wie vor eine (wenn auch verkleinerte) Neutronenabsorptionsschicht 3 vorgesehen, die vorliegend aus boriertem Gummi besteht. Im vorliegend dargestellten Ausführungsbeispiel liegt die Borkonzentration in der borierten Gummischicht bei 10 %. Es sind jedoch auch anderweitige Konzentrationen, wie beispielsweise Konzentrationen zwischen 0 %, 5 %, 10 %, 15 % oder 20 % bis 5 %, 10 %, 15 %, 20 %, 25 %, 30 % oder 40 % denkbar. Selbstverständlich sind auch andere Materialien mit neutronenabsorbierenden Eigenschaften denkbar. Speziell Bor erweist sich jedoch als vorteilhaft, da es in der vorgeschlagenen Gummischicht in im Wesentlichen beliebigen Konzentrationen vorgesehen werden kann, sodass eine besonders gute Anpassbarkeit des Neutronendosimeters 1 ermöglicht wird.

Weiter nach innen folgt auf die Neutronenabsorptionsschicht 3 eine Neutronenkonversionsschicht 4, welche aus einem metallhaltigen Material mit Metallen hoher Kernladungszahl, vorliegend Blei, gefertigt sein sollte. In der Neutronenkonversionsschicht 4 kommt es zu Spallationseffekten von besonders hochenergetischen Neutronen (typischerweise mit Energien von ≥ 10 MeV bis hin zu einigen 100 GeV). Die metallischen Kerne der Neutronenkonversionsschicht 4 fangen derartige, hochenergetische Neutronen (zunächst) ein. Durch Interaktion mit den anderen Nukleonen im Atomkern kommt es zu einer Freisetzung (Verdampfen/Spallation) von Protonen und Neutronen aus dem betreffenden Atomkern heraus. Die freigesetzten Nukleonen, insbesondere Neutronen, weisen dabei eine niedrigere Energie auf, die der Energie thermischer Neutronen oder schneller Neutronen entspricht (sodass die betreffenden Neutronen durch insbesondere nachgeschaltete Moderatormaterialien hin zu thermischen Neutronen verlangsamt werden können).

Innerhalb der Neutronenkonversionsschicht 4 ist eine spezielle ("ausschließliche") Moderatorschicht 5 vorgesehen. Hier werden Neutronen mit mittlerer Energie (typische Energien 25 meV bis 10 MeV; sogenannte schnelle Neutronen) verlangsamt, insbesondere bis hin auf das Energieniveau thermischer Neutronen (typische Energien ≤ 25 meV), sodass die betreffenden Neutronen vom eigentlichen Detektionselement 7 (vorliegend eine TLD-Karte) erfasst werden können. Vorliegend wird ein "reines" Moderatormaterial verwendet (welches also bestenfalls nur eine geringe Neutronenabsorption zeigt), vorliegend Polypropylen (PP), Polyäthylen (PE) oder Polymethylmethachrylat (PMMA). Wenn man betreffende Kunststoffmaterialien hoher Dichte verwendet (welche problemlos kommerziell erhältlich sind), so kann die Dimension des Neutronendosimeters 1 weiter verringert werden.

Ganz im Inneren des Neutronendosimeters 1 ist schließlich noch ein Aufnahmebereich 6 für das eigentliche Detektionselement vorgesehen. Vorliegend handelt es sich bei dem Aufnahmebereich 6 um einen Kartenaufnahmebereich 6 für eine TLD-Karte 7. Selbstverständlich ist es auch möglich, insbesondere durch Vorsehen unterschiedlicher Geometrien und Anordnung unterschiedlicher Detektionselemente (welche zusätzlich oder alternativ zu TLD-Karten 7 verwendet werden können), anderweitige Detektionselemente, die gegebenenfalls auch auf unterschiedlichen physikalischen Prinzipien beruhen, zu verwenden.

Standardmäßig wird jedoch die Verwendung von TLD-Karten 7 vorgeschlagen. Insbesondere können kommerziell erhältliche, standardisierte TLD-Karten 7 verwendet werden, welche typischerweise vier Aufnahmebereiche für Lithiumfluorid-Kristalle (LiF-Kristalle) aufweisen. Der Vorteil bei einer derartigen Ausbildung des Neutronendosimeters 1 liegt darin, dass auf vorhandene Infrastruktur zurückgegriffen werden kann, was insbesondere die Akzeptanz des vorliegend vorgeschlagenen Neutronendosimeters 1 erhöhen helfen kann.

Darüber hinaus haben TLD-Karten 7 weitere vorteilhafte Eigenschaften. Insbesondere können diese auch sehr hohe (kurzfristig auftretende) Dosen registrieren. Dies ist insbesondere von Relevanz, da Teilchenbeschleuniger unter Verwendung von ultrakurz gepulsten Laserblitzen zunehmend aufkommen. Zu den Zeitpunkten der ultrakurzen Laserpulse kommt es jedoch zu schwallartigen, sehr kurzen Neutronenfreisetzungen (und Freisetzung sonstiger ionisierender Strahlung), wobei im betreffenden Zeitfenster sehr hohe Dosisleistungen auftreten. Nicht jedes Detektormaterial ist geeignet, derartige hohe Dosisleistungen registrieren zu können. TLD-Karten 7 sind jedoch auch in ihrer derzeitigen Ausführungsform hierzu in aller Regel im Stande.

Typische Dimensionen für das vorliegend vorgeschlagene erste Ausführungsbeispiel eines Neutronendosimeters 1 sind eine Höhe von etwa 10 cm und ein Durchmesser von etwa 51 mm für die innere Moderatorschicht 5, eine Höhe von etwa 12 cm und ein Durchmesser von etwa 71 mm für die Neutronenkonversionsschicht 4, eine Höhe von etwa 13 cm und ein Durchmesser von etwa 81 mm für die Neutronenabsorptionsschicht 3 und eine Höhe von etwa 16 cm und ein Durchmesser von etwa 160 mm für die PVC-Schicht 2. Die genannten Maße sind jeweils die Außenmaße der betreffenden Schicht. Die Innenmaße ergeben sich aus den Außenmaßen der jeweils nächstinneren Schicht bzw. aus Formgebung und Größe des innenliegenden Aufnahmebereichs 6.

Das resultierende Außenmaß entspricht somit der Größe der PVC-Schicht 2 und liegt damit im Bereich von 16 cm Höhe und 16 cm Durchmesser. Dies ist zu vergleichen mit den "GSI-Kugeln", wie sie beispielsweise in DE 10 2004 020 979 A1 beschrieben sind, welche einen Durchmesser von typischerweise 30 cm aufweisen. Grob gesprochen handelt es sich also um eine Größenreduktion auf jeweils etwa die Hälfte, mit einer hierzu korrespondierenden Gewichtsreduktion um einen Faktor in der Größenordnung von 8 (skaliert mit dritter Potenz).

Beim zweiten Ausführungsbeispiel eines Neutronendetektors 8 fehlt die dezidierte Neutronenabsorptionsschicht 3 völlig. Die entsprechende Funktionalität der Neutronenabsorption (speziell von thermischen Neutronen) wird durch die außenliegende PVC-Schicht 2 (kombinierte Neutronenabsorptions- und Neutronenmoderatorschicht) übernommen. Den "Wegfall" der dezidierten Neutronenabsorptionsschicht 3 kann man durch eine entsprechend größere (dickere) Ausbildung der PVC-Schicht 2 kompensieren. Gegebenenfalls ist dies aber auch gar nicht nötig, speziell wenn aufgrund der Umgebungsbedingungen nur vergleichsweise wenige Neutronen mit mittlerer Energie (schnelle Neutronen) auftreten. Die verringerte Absorption thermischer Neutronen führt nämlich in der Regel zu einer Überempfindlichkeit des Neutronendosimeters 8 für Neutronen mittlerer Energie (also für schnelle Neutronen). Dementsprechend ist die schlussendlich von der TLD-Karte 7 gemessene Dosisleistung eine konservative (weil zu hohe) Abschätzung für die eigentlich vorhandene Dosisleistung. Treten nur wenige Neutronen mittlerer Energie auf, so kann die "Überempfindlichkeit" des Neutronendosimeters 8 für Neutronen in diesem Energiebereich ohne Weiteres in Kauf genommen werden, da dies die gesamte, gemessene Dosisleistung nur vergleichsweise gering beeinflusst.

Der Vollständigkeit halber wird erwähnt, dass auch der umgekehrte Fall eintreten kann, dass also (zum Teil bereits verlangsamte, insbesondere in einem Moderatorbereich verlangsamte) Neutronen nicht "zu stark wegabsorbiert werden sollen". Dazu ist es möglich, dass in einer oder mehreren Schichten (typischerweise in der Neutronenabsorptionsschicht 3 und/oder in der Neutronenkonversionsschicht 4) Löcher 9 vorgesehen werden. Diese ermöglichen einen ungehinderten und unbeeinflussten Durchgang von thermischen Neutronen durch die entsprechende Schicht. Selbstverständlich ist es auch möglich, dass derartige Löcher 9 insbesondere auch in einer PVC-Schicht 2 oder einer "reinen" Moderatorschicht 5 zusätzlich oder alternativ vorgesehen werden.

### Bezugszeichenliste:

- 1.: Neutronendosimeter
- 2.: PVC-Schicht
- 3.: Neutronenabsorptionsschicht
- 4.: Neutronenkonversionsschicht
- 5.: Moderatorschicht
- 6.: Aufnahmebereich für Detektionselement
- 7.: TLD-Karte
- 8.: Neutronendosimeter
- 9.: Loch

## Patentansprüche

1. Dosimeter (1, 8) zur Erfassung polyenergetischer Neutronenstrahlung, aufweisend zumindest einen Aufnahmebereich (6) für zumindest ein Detektionselement (7) sowie zumindest einen Neutronenabsorptionsbereich (2, 3), **dadurch gekennzeichnet, dass** der Neutronenabsorptionsbereich (2, 3) zumindest bereichsweise ein chlorhaltiges Material aufweist oder aus einem chlorhaltigen Material besteht, welches Chlor enthält, insbesondere ein chlorhaltiges Material, bei dem Chlor einen atomaren Bestandteil eines Material-Moleküls darstellt.

2. Dosimeter (1, 8) nach Anspruch 1, **dadurch gekennzeichnet, dass** das chlorhaltige Material zumindest bereichsweise ein chlorhaltiges Kunststoffmaterial aufweist oder zumindest bereichsweise aus einem chlorhaltigen Kunststoffmaterial besteht.

3. Dosimeter (1, 8) nach Anspruch 1 oder 2, insbesondere nach Anspruch 2, **dadurch gekennzeichnet, dass** das chlorhaltige Kunststoffmaterial zumindest bereichsweise PVC aufweist oder aus PVC besteht, vorzugsweise PVC hoher Dichte aufweist oder aus PVC hoher Dichte besteht.

4. Dosimeter (1, 8) nach einem der vorangehenden Ansprüche, **gekennzeichnet durch** zumindest einen Moderatorbereich (2, 5), welcher vorzugsweise zumindest bereichsweise ein wasserstoffhaltiges Material aufweist oder aus einem wasserstoffhaltigen Material besteht, wobei der Wasserstoff insbesondere einen atomaren Bestandteil eines Material-Moleküls darstellt.

5. Dosimeter (1, 8) nach einem der vorangehenden Ansprüche, insbesondere nach Anspruch 4 in Kombination mit Anspruch 2 oder 3, **dadurch gekennzeichnet, dass** zumindest ein Neutronenabsorptionsbereich (2, 3) und zumindest ein Moderatorbereich (2, 5) zumindest bereichsweise zusammenfallen (2) und/oder zumindest bereichsweise ein gleichartiges, vorzugsweise ein gleiches Material aufweisen oder zumindest bereichsweise aus einem gleichartigen, vorzugsweise aus einem gleichen Material bestehen.

6. Dosimeter (1, 8) nach einem der vorangehenden Ansprüche, insbesondere nach Anspruch 4 oder 5, **gekennzeichnet durch** eine Mehrzahl von Moderatorbereichen (2, 5), wobei vorzugsweise zumindest zwei Moderatorbereiche (2, 5) verschiedenartig ausgebildet sind und/oder ein verschiedenartiges Material aufweisen und/oder aus einem verschiedenartigen Material bestehen.

7. Dosimeter (1, 8) nach einem der vorangehenden Ansprüche, insbesondere nach Anspruch 6, **dadurch gekennzeichnet, dass** zumindest ein Moderatorbereich (5) ein Polyäthylenmaterial (PE) und/oder ein Polypropylenmaterial (PP) und/oder ein Polymethylmethachrylatmaterial (PMMA) aufweist und/oder aus einem Polyäthylenmaterial und/oder einem Polypropylenmaterial und/oder einem Polymethylmethachrylatmaterial besteht, wobei das betreffende Material vorzugsweise ein dichtes Polyäthylenmaterial und/oder ein dichtes Polypropylenmaterial und/oder ein dichtes Polymethylmethachrylatmaterial ist.

8. Dosimeter (1, 8) nach einem der vorangehenden Ansprüche, **gekennzeichnet durch** zumindest einen Neutronenkonverterbereich (4), wobei der Neutronenkonverterbereich (4) zumindest bereichsweise zumindest ein metallisches Material aufweist bzw. aus einem metallischen Material besteht.

9. Dosimeter (1, 8) nach Anspruch 8, **dadurch gekennzeichnet, dass** es sich bei zumindest einem metallischen Material um ein Titanmaterial, Chrommaterial, Vanadiummaterial, Eisenmaterial, Kupfermaterial, Wolframmaterial, Bleimaterial, Wismutmaterial und/oder Zirkoniummaterial handelt.

10. Dosimeter (1, 8) nach einem der vorangehenden Ansprüche, **dadurch gekennzeichnet, dass** zumindest ein Materialbereich (2, 3, 4, 5) schichtenartig ausgebildet ist und/oder dadurch, dass zumindest ein Materialbereich (2, 3, 4, 5) eine im Wesentlichen zylindrische Formgebung und/oder eine im Wesentlichen tonnenartige Formgebung aufweist.

11. Dosimeter (1, 8) nach einem der vorangehenden Ansprüche, **dadurch gekennzeichnet, dass** zumindest ein Materialbereich (2, 3, 4, 5), insbesondere zumindest ein Moderatorbereich (2, 5), zumindest ein Neutronenabsorberbereich (2, 3) und/oder zumindest ein Neutronenkonverterbereich (4) mit Ausnehmungen (9) versehen ist.

12. Dosimeter (1, 8) nach einem der vorangehenden Ansprüche, **gekennzeichnet durch** zumindest ein aktives Detektionselement und/oder zumindest ein passives Detektionselement (7).

13. Dosimeter (1, 8) nach einem der vorangehenden Ansprüche, insbesondere nach Anspruch 12, **gekennzeichnet durch** zumindest ein Thermolumineszenzelement (7) und/oder **durch** zumindest ein Photolumineszenzelement, welches bevorzugt separat handhabbar ausgebildet ist und sich weiter bevorzugt im Aufnahmebereich (6) für zumindest ein Detektionselement befindet.
